# EUROPEAN PATENT APPLICATION

(11) **EP 4 601 111 A1**
(43) Date of publication of application: **13.08.2025**
(21) Application number: 23874498.1
(22) Date of filing: 13.07.2023
(51) Int. Cl.: H01M 50/557, H01M 50/178, H01M 50/211, H01M 50/50, H01M 50/548

(54) **BATTERY CELL AND BATTERY MODULE**

(30) Priority: 04.10.2022 JP 2022160209
(71) Applicant: AESC Japan Ltd., Kanagawa, 2520012 (JP)
(72) Inventor: ZHOU, Yingying, Zama-shi, Kanagawa 252-0012 (JP); KANEKO, Shinako, Zama-shi, Kanagawa 252-0012 (JP); NAKASHIMA, Satoshi, Zama-shi, Kanagawa 252-0012 (JP)
(74) Representative: Mathys & Squire
(86) International application number: PCT/JP2023/025903
(87) International publication number: WO 2024/075364

(57) **Abstract**

A battery cell (100A) includes a positive electrode tab (110A). The positive electrode tab (110A) includes a first base part (111A), a first upper end part (112A) decreasing in thickness away from the first base part (111A), and a first upper projection part (114A) that is positioned between the first base part (111A) and the first upper end part (112A) and protrudes further outward than the first base part (111A).

## Description

### Technical Field

The present invention relates to a battery cell and a battery module.

### BACKGROUND ART

In recent years, various battery cells including a battery element such as a lithium-ion secondary battery have been developed. The battery element is sealed by an exterior member. A tab such as a positive electrode tab and a negative electrode tab is drawn out of the exterior member.

Patent Document 1 describes one example of a tab of a battery cell. Both end parts in a width direction of the tab have a taper shape.

Patent Document 2 describes one example of a tab of a battery cell. The tab includes a copper strip, and a nickel-plated layer covering the copper strip. The thickness of the nickel-plated layer is partially larger in both end parts in the width direction of the copper strip.

Patent Document 3 describes one example of a method of manufacturing a tab of a battery cell. In the method, drawn wire is rolled by a rolling roll to form the tab.

Patent Document 4 describes one example of laser welding. In the method, two members are joined to each other by laser welding with the two member opposite across a gap.

### RELATED DOCUMENT

### PATENT DOCUMENT

Patent Document 1: Japanese Patent Application Publication No. 2013-243015
Patent Document 2: Japanese Patent Application Publication No. 2016-134297
Patent Document 3: Japanese Patent Application Publication No. 2008-204902
Patent Document 4: Japanese Patent Application Publication No. S59-133985

### DISCLOSURE OF THE INVENTION

### TECHNICAL PROBLEM

A tab of a battery cell may be joined to an object to be joined such as another tab or a bus bar by laser welding. In this case, the laser may be irradiated with the tab and the object to be joined opposite across a gap to strongly join the tab and the object to be joined as described in Patent Document 4 for example. It may be, however, difficult to form the appropriate gap between the tab and the object to be joined by simply opposing the tab and the object to be joined.

One example of an object of the present invention is to strongly join a tab and an object to be joined to each other. Another object of the present invention will be apparent from description of the present specification.

### SOLUTION TO PROBLEM

An aspect of the present invention is described below.
[1] A battery cell including
   a tab, wherein
   the tab includes a base part, an end part decreasing in thickness away from the base part, and a projection part that is positioned between the base part and the end part and protrudes further outward than the base part.
[2] The battery cell according to [1], wherein
   the tab further includes another projection part protruding further outward than the base part toward an opposite side of the projection part.
[3] A battery module including:
   the battery cell according to [1] or [2]; and
   at least another battery cell including at least another tab, wherein
   the base part and the at least another tab are joined to each other with the projection part and the at least another tab in contact with each other.
[4] A battery cell including
   a tab, wherein
   the tab includes a base part joined to an object to be joined, and a projection part that protrudes further outward than the base part and is in contact with the object to be joined.
[5] The battery cell according to [4], wherein
   the tab further includes another projection part protruding further outward than the base part toward an opposite side of the projection part.
[6] A battery module including:
   the battery cell according to [4] or [5]; and
   at least another battery cell including at least another tab as the object to be joined.

### ADVANTAGEOUS EFFECTS OF INVENTION

According to the above aspect of the present invention, the tab and the object to be joined can be strongly joined to each other.

### BRIEF DESCRIPTION OF THE DRAWINGS

[Fig. 1] A plan view of a part of a battery module according to an embodiment 1.
[Fig. 2] An A-A' cross-sectional diagram of Fig. 1.
[Fig. 3] A diagram illustrating joint between a positive electrode tab and a conductor.
[Fig. 4] A cross-sectional diagram of a joined part among a plurality of positive electrode tabs and a plurality of negative electrode tabs in a battery module according to a variant.
[Fig. 5] A diagram illustrating one example of a method of manufacturing a positive electrode tab according to the embodiment 1.
[Fig. 6] A cross-sectional diagram of a joined part between a positive electrode tab and a negative electrode tab in a battery module according to an embodiment 2.
[Fig. 7] A cross-sectional diagram of a joined part between a positive electrode tab and a negative electrode tab in a battery module according to an embodiment 3.

### DESCRIPTION OF EMBODIMENTS

Hereinafter, embodiments and a variant according to the present invention are described by using the drawings. In all drawings, a similar component is assigned with a similar reference sign, and description is omitted as appropriate.

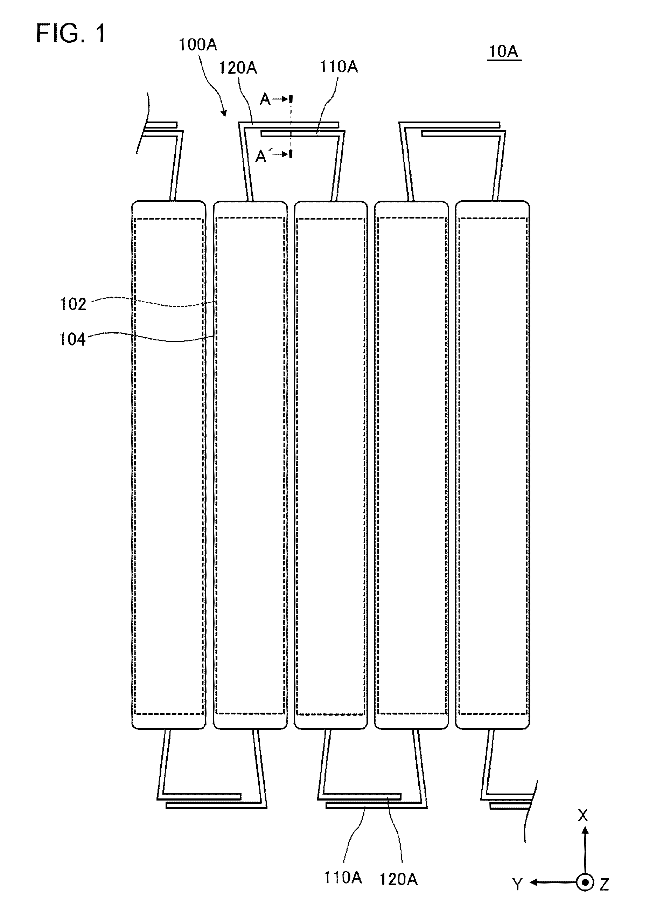

Fig. 1 is a plan view of a part of a battery module 10A according to an embodiment 1.

In Fig. 1, an X direction, a Y direction, and a Z direction are provided for description. The white circle with the black dot indicating the Z direction indicates that the arrow indicating the Z direction extends from back to front of the surface of paper. The X direction, the Y direction, and the Z direction each are a front-rear direction, a left-right direction, and an upper-lower direction of the battery module 10A. The X direction, the Y direction, and the Z direction are orthogonal to one another. The arrow indicating the X direction, the arrow indicating the Y direction, and the arrow indicating the Z direction indicate a front direction, a left direction, and an upper direction of the battery module 10A respectively. The relation among the X direction, the Y direction, the Z direction, and the front-rear direction, the left-right direction, and the upper-lower direction of the battery module 10A, however, is not limited to the example described above.

Hereinafter, a plane perpendicular to the X direction is referred to as a YZ plane as necessary. Hereinafter, a plane perpendicular to the Y direction is referred to as a ZX plane as necessary. Hereinafter, a plane perpendicular to the Z direction is referred to as an XY plane as necessary.

The battery module 10A includes a plurality of battery cells 100A. The plurality of battery cells 100A is laminated substantially in parallel to the Y direction. Each battery cell 100A includes a battery element 102, an exterior member 104, a positive electrode tab 110A, and a negative electrode tab 120A.

The battery element 102 has a substantially rectangular shape. The longitudinal direction of the battery element 102 is substantially parallel to the X direction. The lateral direction of the battery element 102 is substantially parallel to the Z direction. The thickness direction of the battery element 102 is substantially parallel to the Y direction. In one example, the battery element 102 includes a plurality of positive electrodes and a plurality of negative electrodes, not illustrated, alternately laminated in the Y direction, and a separator, not illustrated, positioned between a positive electrode and a negative electrode adjacent in the Y direction. The structure of the battery element 102, however, is not limited to this example.

The exterior member 104 seals the battery element 102. The exterior member 104 includes, for example, a laminated film.

The positive electrode tab 110A is drawn out of the exterior member 104 at one of the front end and the rear end of the battery cell 100A. The tip part of the positive electrode tab 110A is bent substantially in parallel to the Y direction. The positive electrode tab 110A is electrically connected to a positive electrode not illustrated of the battery element 102. The positive electrode tab 110A is formed of, for example, metal such as aluminum.

The negative electrode tab 120A is drawn out of the exterior member 104 at the other of the front end and the rear end of the battery cell 100A. The tip part of the negative electrode tab 120A is bent substantially in parallel to the Y direction. The negative electrode tab 120A is electrically connected to a negative electrode not illustrated of the battery element 102. The negative electrode tab 120A is formed of, for example, metal such as copper.

In the embodiment 1, a plurality of battery cells 100A is connected in series. Specifically, the tip part of the positive electrode tab 110A of one battery cell 100A and the tip part of the negative electrode tab 120A of the other battery cell 100A are overlapped substantially in parallel to the X direction and joined to each other in front of or behind the battery cells 100 adjacent in the Y direction. The joined part between the tip part of the positive electrode tab 110A and the tip part of the negative electrode tab 120A is disposed alternately in front of and behind the battery module 10A. In the example illustrated in Fig. 1, the negative electrode tab 120A is positioned in front of the positive electrode tab 110A at the joined part in front of the battery module 10A. The positive electrode tab 110A is positioned behind the negative electrode tab 120A at the joined part behind the battery module 10A.

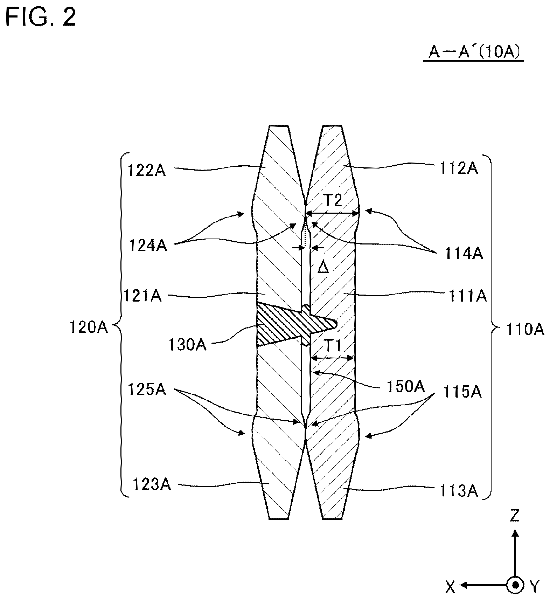

Fig. 2 is an A-A' cross-sectional diagram of Fig. 1. The white circle with the black dot indicating the Y direction indicates that the arrow indicating the Y direction extends from back to front of the surface of paper.

The following is a description of the A-A' cross section of the positive electrode tab 110A and the negative electrode tab 120A. In other words, the description is given on the cross section perpendicular to the Y direction of the joined part between the tip part of the positive electrode tab 110A and the tip part of the negative electrode tab 120A. The cross section of the tip part of the positive electrode tab 110A is substantially the same as the A-A' cross section also in another cross section perpendicular to the extending direction of the positive electrode tab 110A. Similarly, the cross section of the tip part of the negative electrode tab 120A is substantially the same as the A-A' cross section also in another cross section perpendicular to the extending direction of the negative electrode tab 120A.

The positive electrode tab 110A includes a first base part 111A, a first upper end part 112A, a first lower end part 113A, a pair of first upper projection parts 114A, and a pair of first lower projection parts 115A.

The thickness of the first base part 111A in the X direction is substantially constant regardless of the position in the Z direction. The front surface and the rear surface of the first base part 111A are substantially in parallel to the YZ plane. The thickness T1 of the first base part 111A in the X direction is, for example, equal to or greater than 0.15 mm and equal to or less than 1.0 mm.

The first upper end part 112A has a substantially tapered shape. Specifically, the thickness of the first upper end part 112A in the X direction decreases with distance above the first base part 111A. In the example illustrated in Fig. 2, the front surface of the first upper end part 112A tilts backward towards the upper side. The rear surface of the first upper end part 112A tilts forward towards the upper side. In this case, the first upper end part 112A can be easily sealed by the exterior member 104 compared to the case where the thickness of the first upper end part 112A in the X direction is substantially constant regardless of the position in the Z direction. According to the embodiment 1, therefore, the sealing of the exterior member 104 can be improved compared to the case where the thickness of the first upper end part 112A in the X direction is substantially constant regardless of the position in the Z direction.

The first lower end part 113A has a substantially tapered shape. Specifically, the thickness of the first lower end part 113A in the X direction decreases with distance down the first base part 111A. In the example illustrated in Fig. 2, the front surface of the first lower end part 113A tilts backward towards the lower side. The rear surface of the first lower end part 113A tilts forward towards the lower side. In this case, the first lower end part 113A can be easily sealed by the exterior member 104 compared to the case where the thickness of the first lower end part 113A in the X direction is substantially constant regardless of a position in the Z direction. According to the embodiment 1, therefore, the sealing of the exterior member 104 can be improved compared to the case where the thickness of the first lower end part 113A in the X direction is substantially constant regardless of the position in the Z direction.

In the example illustrated in Fig. 2, the cross-sectional shape of the first upper end part 112A and the cross-sectional shape of the first lower end part 113A are substantially symmetrical. The cross-sectional shape of the first upper end part 112A and the cross-sectional shape of the first lower end part 113A, however, may be unsymmetrical. Alternatively, the width of one of the first upper end part 112A and the first lower end part 113A in the X direction may be substantially constant regardless of the position in the Z direction.

The pair of first upper projection parts 114A is positioned between the first base part 111A and the first upper end part 112A in the Z direction. The pair of first upper projection parts 114A protrudes further outward than the first base part 111A in the X direction. Specifically, the front first upper projection part 114A protrudes further forward than the front surface of the first base part 111A. The front first upper projection part 114A is convexly curved forward. The rear first upper projection part 114A protrudes further backward than the rear surface of the first base part 111A. The rear first upper projection part 114A is convexly curved backward. The X direction maximum thickness T2 of a portion the positive electrode tab 110A provided with the pair of first upper projection parts 114A is, for example, equal to or greater than T1 + 10 µm and equal to or less than T1 + 200 µm, and preferably equal to or greater than T1 + 30 µm and equal to or less than T1 + 100 µm.

The cross-sectional shape of each first upper projection part 114A is not limited to this example. For example, the cross-sectional shapes of the pair of first upper projection parts 114A are substantially symmetrical in the example illustrated in Fig. 2. The cross-sectional shapes of the pair of first upper projection parts 114A, however, may be unsymmetrical.

The pair of first lower projection parts 115A is positioned between the first base part 111A and the first lower end part 113A in the Z direction. The pair of first lower projection parts 115A protrudes further outward than the first base part 111A in the X direction. Specifically, the front first lower projection part 115A protrudes further forward than the front surface of the first base part 111A. The front first lower projection part 115A is convexly curved forward. The rear first lower projection part 115A protrudes further backward than the rear surface of the first base part 111A. The rear first lower projection part 115A is convexly curved backward. The X direction maximum thickness of a portion of the positive electrode tab 110A provided with the pair of first lower projection parts 115A may be equal to or different from the maximum thickness T2 described above.

The cross-sectional shape of each first lower projection part 115A is not limited to this example. For example, the cross-sectional shapes of the pair of first lower projection parts 115A are substantially symmetrical in the example illustrated in Fig. 2. The cross-sectional shapes of the pair of first lower projection parts 115A, however, may be unsymmetrical.

The X direction height Δ of the front end of the first upper projection part 114A relative to the front surface of the first base part 111A is, for example, greater than 0 and equal to or less than 250 µm. The X direction height of the rear end of the rear first upper projection part 114A relative to the rear surface of the first base part 111A may be equal to or different from the height Δ. The X direction height of the front end of the front first lower projection part 115A relative to the front surface of the first base part 111A may be equal to or different from the height Δ. The X direction height of the rear end of the rear first lower projection part 115A relative to the rear surface of the first base part 111A may be equal to or different from the height Δ.

The difference T2 - T1 between the X direction maximum thickness T2 of a portion of the positive electrode tab 110A provided with the pair of first upper projection parts 114A and the thickness T1 of the first base part 111A in the X direction may be, for example, greater than 0 and equal to or less than 200 µm, and preferably greater than 0 and equal to or less than 100 µm. The difference between the X direction thickness of a portion of the positive electrode tab 110A provided with the pair of first lower projection parts 115A and the thickness T1 of the first base part 111A in the X direction may be equal to or different from the difference T2 - T1.

The negative electrode tab 120A includes a second base part 121A, a second upper end part 122A, a second lower end part 123A, a pair of second upper projection parts 124A, and a pair of second lower projection parts 125A as does the positive electrode tab 110A. In the embodiment 1, the cross-sectional shape of the negative electrode tab 120A is substantially the same as the cross-sectional shape of the positive electrode tab 110A. The cross-sectional shape of the negative electrode tab 120A, however, may be different from the cross-sectional shape of the positive electrode tab 110A.

The first base part 111A and the second base part 121A are joined to each other by a fused part 130A. The fused part 130A is formed by laser welding. In the laser welding, the laser is irradiated from the front of the negative electrode tab 120A to the front surface of the negative electrode tab 120A. The fused part 130A is therefore formed by fusing the laser irradiated portion of the negative electrode tab 120A and the laser irradiated portion of the positive electrode tab 110A.

In the embodiment 1, the front first upper projection part 114A and the rear second upper projection part 124A are in contact with each other. Similarly, the front first lower projection part 115A and the rear second lower projection part 125A are in contact with each other. The first base part 111A and the second base part 121A, therefore, are joined to each other with the front first upper projection part 114A and the rear second upper projection part 124A in contact with each other and the front first lower projection part 115A and the rear second lower projection part 125A in contact with each other. A gap 150A is formed between the front surface of the first base part 111A and the rear surface of the second base part 121A with the front first upper projection part 114A and the rear second upper projection part 124A in contact with each other and the front first lower projection part 115A and the rear second lower projection part 125A in contact with each other. A part of the fused part 130A is widened in the gap 150A substantially in parallel to the YZ plane. The joint area of the fused part 130A between the front surface of the first base part 111A and the rear surface of the second base part 121A can be increased by the wider portion of the fused part 130A in the gap 150 compared to the case where the front surface of the first base part 111A and the rear surface of the second base part 121A are in contact with each other. According to the embodiment 1, therefore, the first base part 111A and the second base part 121A can be strongly joined to each other compared to the case where the front surface of the first base part 111A and the rear surface of the second base part 121A are in contact with each other.

In the embodiment 1, the width of the gap 150A in the X direction can be adjusted by the X direction height of the front first upper projection part 114A and the front first lower projection part 115A relative to the front surface of the first base part 111A and the X direction height of the rear second upper projection part 124A and the rear second lower projection part 125A relative to the rear surface of the second base part 121A. The width of the gap 150A in the X direction, therefore, can be set to a width appropriate for laser welding by adjusting the heights of these projection parts.

In the embodiment 1, the pair of first upper projection parts 114A are protruded to opposite sides to each other in the Y direction. The same applies to the pair of first lower projection parts 115A, the pair of second upper projection parts 124A, and the pair of second lower projection parts 125A. The gap can be therefore formed between the rear surface of the first base part 111A and the front surface of the second base part 121 even if the positions of the positive electrode tab 110A and the negative electrode tab 120A are switched to each other in the X direction. In some battery module 10A, the positive electrode tab 110A may be disposed in front of the negative electrode tab 120A in the joined part between the positive electrode tab 110A and the negative electrode tab 120A. According to the positive electrode tab 110A and the negative electrode tab 120A of the embodiment 1, therefore, the first base part 111A and the second base part 121A can be strongly joined to each other regardless of disposition in the X direction of the positive electrode tab 110A and the negative electrode tab 120A. The assembly of the battery module 10A can be improved accordingly.

In the embodiment 1, the projection parts of the positive electrode tab 110A each are provided to both sides in the Z direction of the first base part 111A. For this reason, the width of the gap 150A between the positive electrode tab 110A and the negative electrode tab 120A in the X direction can be stably set compared to the case where the projection part is only provided to either one of both sides in the Z direction of the first base part 111A. The projection part, however, may be only provided to one side of the first base part 111A in the Z direction. The same applies to the projection part of the negative electrode tab 120A.

The cross-sectional shape of the positive electrode tab 110A and the cross-sectional shape of the negative electrode tab 120A are not limited to the example illustrated in Fig. 2.

For example, the rear surface of the positive electrode tab 110A and the front surface of the negative electrode tab 120A may be substantially parallel to the YZ plane. In this case, the first upper projection part 114A and the first lower projection part 115A may be only provided to the front surface of the positive electrode tab 110A. In other words, the first upper projection part 114A and the first lower projection part 115A may be only provided to the surface of the positive electrode tab 110A opposite to the negative electrode tab 120A. The second upper projection part 124A and the second lower projection part 125A, on the other hand, may be only provided to the rear surface of the negative electrode tab 120A. In other words, the second upper projection part 124A and the second lower projection part 125A may be only provided to the surface of the negative electrode tab 120A opposite to the positive electrode tab 110A. In this case, the gap 150A can be also formed between the front surface of the first base part 111A and the rear surface of the second base part 121A.

Alternatively, one of the positive electrode tab 110A and the negative electrode tab 120A may not include the projection part. In this example, the projection part is provided to the front surface of the positive electrode tab 110A or the rear surface of the negative electrode tab 120A. In other words, the projection part is provided to one of the surface of the positive electrode tab 110A opposite to the negative electrode tab 120A and the surface of the negative electrode tab 120A opposite to the positive electrode tab 110A. In this case, the gap 150A can be also formed between the front surface of the first base part 111A and the rear surface of the second base part 121A.

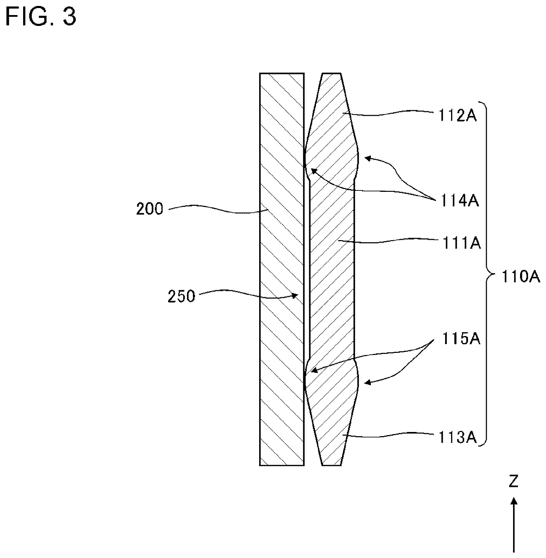

Fig. 3 is a diagram illustrating joint between the positive electrode tab 110A and a conductor 200.

In the example illustrated in Fig. 2, the negative electrode tab 120A is an object to be joined for the positive electrode tab 110A. The object to be joined for the positive electrode tab 110A, however, is not limited to the negative electrode tab 120A. For example, as illustrated in Fig. 3, the object to be joined for the positive electrode tab 110A may be a conductor 200 substantially in parallel to the YZ plane. Examples of the conductors 200 include a bus bar that connects the battery module 10A to an external battery module not illustrated.

In the example illustrated in Fig. 3, the first upper projection part 114A and the first lower projection part 115A on the side where the conductor 200 is positioned are in contact with the conductor 200. The first base part 111A and the conductor 200, therefore, are joined to each other with the first upper projection part 114A and the first lower projection part 115A on the side where the conductor 200 is positioned in contact with the conductor 200. A gap 250 is formed between opposed surfaces of the first base part 111A and the conductor 200 with the first upper projection part 114A and the first lower projection part 115A on the side where the conductor 200 is positioned in contact with the conductor 200. In other words, the first base part 111A and the conductor 200 are opposed across the gap 250. For this reason, as described by using Fig. 2, the first base part 111A and the conductor 200 can be strongly joined to each other by the laser welding compared to the case where the first base part 111A and the conductor 200 are in contact with each other.

In Fig. 3, the joint between the positive electrode tab 110A and the conductor 200 is described. The description using Fig. 3 is applicable similarly to the joint of the negative electrode tab 120A and the conductor 200.

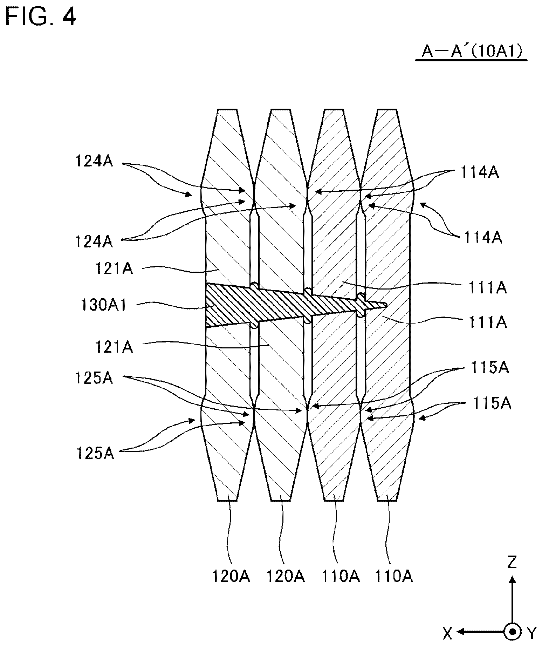

Fig. 4 is a cross-sectional diagram of a joined part among a plurality of positive electrode tabs 110A and a plurality of negative electrode tabs 120A in a battery module 10A1 according to a variant. The battery module 10A1 according to the variant is the same as the battery module 10A according to the embodiment except the following point.

In the variant, the plurality of positive electrode tabs 110A drawn out of a plurality of battery cells 100A connected in parallel and the plurality of negative electrode tabs 120A drawn out of a plurality of other battery cells 100A connected in parallel are joined to one another. In the example illustrated in Fig 4, the two positive electrode tabs 110A drawn out of two battery cells 100A connected in parallel and the two negative electrode tabs 120A drawn out of two other battery cells 100A connected in parallel are joined to one another by a fused part 130A1. Three or more positive electrode tabs 110A and three or more negative electrode tabs 120A, however, may be joined to one another.

Each positive electrode tab 110A includes a pair of first upper projection parts 114A and a pair of first lower projection parts 115A. Each negative electrode tab 120A includes a pair of second upper projection parts 124A and a pair of second lower projection part 125A. The projections are in contact with each other between the tabs adjacent in the X direction. The tabs adjacent in the X direction, therefore, are joined to each other with the projections in contact with each other between the tabs adjacent in the X direction. A gap is formed between the opposite surfaces of the tabs adjacent in the X direction with the projections in contact with each other between the tabs adjacent in the X direction. For this reason, as described according to the embodiment 1, the tabs adjacent in the X direction can be strongly joined to each other compared to the case where the opposite surfaces of the tabs adjacent in the X direction are in contact with each other.

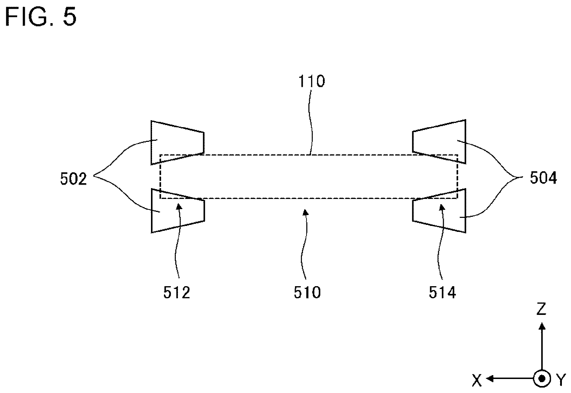

Fig. 5 is a diagram illustrating one example of a method of manufacturing the positive electrode tab 110A according to the embodiment 1. In Fig. 5, the arrow indicating the Z direction indicates an upper direction in a vertical direction. The X direction is one horizontal direction perpendicular to the Z direction. The Y direction is one horizontal direction perpendicular to both of the Z direction and the X direction. In Fig. 5, a positive electrode work 110 is illustrated as being transparent for description.

The positive electrode tab 110A is formed by rolling processing of the positive electrode work 110. In the rolling processing, a pair of first rollers 502 and a pair of second rollers 504 disposed on both sides of a predetermined central space 510 in the X direction are used. Each first roller 502 and each second roller 504 rotate around a rotation axis substantially parallel to the X direction. The pair of first rollers 502 is opposed across a first taper space 512 in the Z direction. The width of the first taper space 512 in the Z direction decreases away from the central space 510 in the X direction. The pair of second rollers 504 is opposed across a second taper space 514 in the Z direction. The width of the second taper space 514 in the Z direction decreases away from the central space 510 in the X direction.

The positive electrode work 110 passes through the central space 510, the first taper space 512, and the second taper space 514 in parallel within the Y direction. A portion of the positive electrode work 110 passing through the central space 510 is formed into the first base part 111A. A portion of the positive electrode work 110 passing through the first taper space 512 is formed into one of the first upper end part 112A and the first lower end part 113A substantially according to the shape of the first taper space 512. A portion of the positive electrode work 110 passing through the second taper space 514 is formed into the other of the first upper end part 112A and the first lower end part 113A substantially according to the shape of the second taper space 514.

In the example illustrated in Fig. 5, when one end part in the X direction of the positive electrode work 110 is compressed by the pair of first rollers 502, a material configuring the one end part in the X direction of the positive electrode work 110 is extruded toward the central space 510. Thereby, a portion of the positive electrode work 110 positioned between the central space 510 and the first taper space 512 protrudes locally in the Z direction. For this reason, one of the pair of first upper projection parts 114A and the pair of first lower projection parts 115A is formed. When the other end part in the X direction of the positive electrode work 110 is also compressed by the pair of second rollers 504, a material configuring the other end part in the X direction of the positive electrode work 110 is extruded toward the central space 510. For this reason, the other of the pair of first upper projection parts 114A and the pair of first lower projection parts 115A is formed based on the same reason as above.

In Fig. 5, the method of manufacturing the positive electrode tab 110A is described. A method of manufacturing the negative electrode tab 120A can be also executed similarly to the method of manufacturing the positive electrode tab 110A.

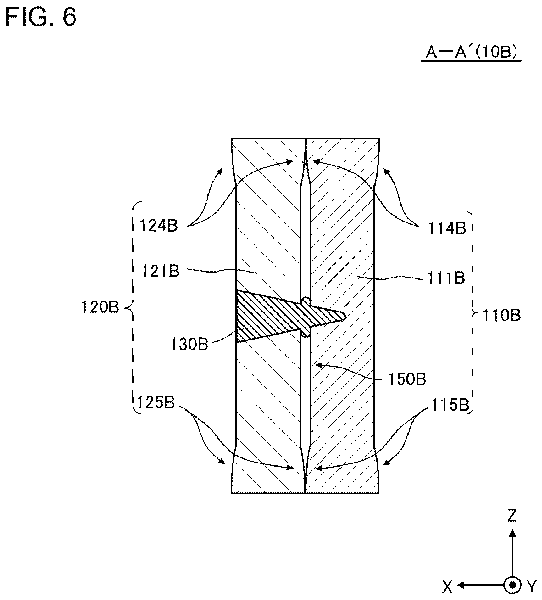

Fig. 6 is a cross-sectional diagram of a joined part between a positive electrode tab 110B and a negative electrode tab 120B in a battery module 10B according to an embodiment 2. The battery module 10B according to the embodiment 2 is the same as the battery module 10A according to the embodiment 1 except the following point.

The positive electrode tab 110B according to the embodiment 2 includes a first base part 111B, a pair of first upper projection parts 114B, and a pair of first lower projection parts 115B. The pair of first upper projection parts 114B is provided to the upper end part of the first base part 111B. The pair of first upper projection parts 114B protrudes further outward than the first base part 111B in the X direction. The pair of first lower projection parts 115B is provided to the lower end part of the first base part 111B. The pair of first lower projection parts 115B protrudes further outward than the first base part 111B in the X direction.

The negative electrode tab 120B according to the embodiment 2 includes a second base part 121B, a pair of second upper projection parts 124B, and a pair of second lower projection parts 125B. The pair of second upper projection parts 124B is provided to the upper end part of the second base part 121B. The pair of second lower projection parts 125B protrudes further outward than the second base part 121B in the X direction. The pair of second lower projection parts 125B is provided to the lower end part of the second base part 121B. The pair of second lower projection parts 125B protrudes further outward than the second base part 121B in the X direction.

According to the embodiment 2, the front first upper projection part 114B and the rear second upper projection part 124B are also in contact with each other as in the embodiment 1. Similarly, the front first lower projection part 115B and the rear second lower projection parts 125B are in contact with each other. The first base part 111B and the second base part 121B,therefore, are joined to each other with the front first upper projection part 114B and the rear second upper projection part 124B in contact with each other and the front first lower projection part 115B and the rear second lower projection part 125B in contact with each other. A gap 150B is formed between the front surface of the first base part 111B and the rear surface of the second base part 121B with the front first upper projection part 114B and the rear second upper projection part 124B in contact with each other and the front first lower projection part 115B and the rear second lower projection part 125B in contact with each other. A part of a fused part 130B is widened in the gap 150B substantially in parallel to a YZ plane. As described in the embodiment 1, the first base part 111B and the second base part 121B can be therefore strongly joined to each other compared to the case where the front surface of the first base part 111B and the rear surface of the second base part 121B are in contact with each other.

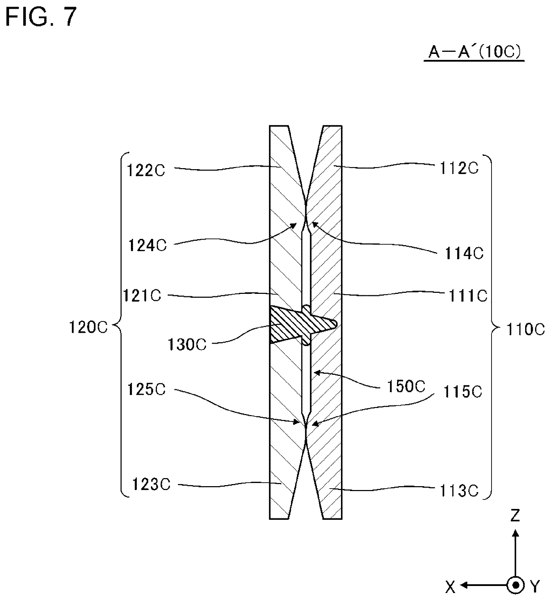

Fig. 7 is a cross-sectional diagram of a joined part between a positive electrode tab 110C and a negative electrode tab 120C in a battery module 10C according to an embodiment 3. The battery module 10C according to the embodiment 2 is the same as the battery module 10A according to the embodiment 1 except the following point.

The positive electrode tab 110C according to the embodiment 3 includes a first base part 111C, a first upper end part 112C, a first lower end part 113C, a first upper projection part 114C, and a first lower projection part 115C. The rear surfaces of the first base part 111C, the first upper end part 112C, and the first lower end part 113C are substantially parallel to and substantially flushed with the YZ plane. The first upper projection part 114C is positioned between the first base part 111C and the first upper end part 112C in a Z direction. The first upper projection part 114C protrudes further forward than the front surface of the first base part 111C. The first lower projection part 115C is positioned between the first base part 111C and the first lower end part 113C in the Z direction. The first lower projection part 115C protrudes further forward than the front surface of the first base part 111C.

The negative electrode tab 120C according to the embodiment 3 includes a second base part 121C, a second upper end part 122C, a second lower end part 123C, a second upper projection part 124C, and a second lower projection part 125C. The front surfaces of the second base part 121C, the second upper end part 122C, and the second lower end part 123C are substantially parallel to and substantially flushed with the YZ plane. The second upper projection part 124C is positioned between the second base part 121C and the second upper end part 122C in the Z direction. The second upper projection part 124C protrudes further backward than the rear surface of the second base part 121C. The second lower projection part 125C is positioned between the second base part 121C and the second lower end part 123C in the Z direction. The second lower projection part 125C protrudes further backward than the rear surface of the second base part 121C.

In the embodiment 3, the first upper projection part 114C and the second upper projection part 124C are also in contact with each other as in the embodiment 1. Similarly, the first lower projection part 115C and the second lower projection parts 125C are in contact with each other. The first base part 111C and the second base part 121C, therefore, are joined to each other with the first upper projection part 114C and the second upper projection part 124C in contact with each other and the first lower projection part 115C and the second lower projection part 125C in contact with each other. A gap 150C is formed between the front surface of the first base part 111C and the rear surface of the second base part 121C with the first upper projection part 114C and the second upper projection part 124C in contact with each other and the first lower projection part 115C and the second lower projection part 125C in contact with each other. A part of a fused part 130C is widened in the gap 150C substantially in parallel to the YZ plane. As described in the embodiment 1, the first base part 111C and the second base part 121C can be therefore strongly joined to each other compared to the case where the front surface of the first base part 111C and the rear surface of the second base part 121C are in contact with each other. The gap 150C can be formed by the first upper projection part 114C, the first lower projection part 115C, the second upper projection part 124C, and the second lower projection part 125C even if the rear surface of the positive electrode tab 110C and the front surface of the negative electrode tab 120C are flat as illustrated in Fig. 7.

The embodiments and the variant of the present invention have been described above with reference to the drawings, but these are exemplification of the present invention, and various configurations other than the above are employable.

This application claims priority based on Japanese patent application No. 2022-160209, filed on October 4, 2022, the disclosure of which is incorporated herein in its entirety by reference.

### REFERENCE SIGNS LIST

10A, 10A1, 10B, 10C Battery module, 100A Battery cell, 102 Battery element, 104 Exterior member, 110 Positive electrode work, 110A, 110B, 110C Positive electrode tab, 111A, 111B, 111C First base part, 112A, 112C First upper end part, 113A, 113C First lower end part, 114A, 114B, 114C First upper projection part, 115A, 115B, 115C First lower projection part, 120A, 120B, 120C Negative electrode tab, 121A, 121B, 121C Second base part, 122A 122C Second upper end part, 123A, 123C Second lower end part, 124A, 124B, 124C Second upper projection part, 125A, 125B, 125C Second lower projection part, 130A, 130A1, 130B, 130C Fused part, 150A, 150B, 150C Gap, 200 Conductor, 250 Gap, 502 First roller, 504 Second roller, 510 Central space, 512 First taper space, 514 Second taper space

## Claims

1. A battery cell comprising
a tab, wherein
the tab includes a base part, an end part decreasing in thickness away from the base part, and a projection part that is positioned between the base part and the end part and protrudes further outward than the base part.

2. The battery cell according to claim 1, wherein
the tab further includes another projection part protruding further outward than the base part toward an opposite side of the projection part.

3. A battery module comprising:
the battery cell according to claim 1 or 2; and
at least another battery cell including at least another tab, wherein
the base part and the at least another tab are joined to each other with the projection part and the at least another tab in contact with each other.

4. A battery cell comprising
a tab, wherein
the tab includes a base part joined to an object to be joined, and a projection part that protrudes further outward than the base part and is in contact with the object to be joined.

5. The battery cell according to claim 4, wherein
the tab further includes another projection part protruding further outward than the base part toward an opposite side of the projection part.

6. A battery module comprising:
the battery cell according to claim 4 or 5; and
at least another battery cell including at least another tab as the object to be joined.
